## Europäisches Patentamt
## European Patent Office
## Office européen des brevets

(19)

(11) Numéro de publication: **0 083 291**
**B1**

(12) **FASCICULE DE BREVET EUROPEEN**

(45) Date de publication du fascicule du brevet:
**12.06.85**

(51) Int. Cl.⁴: **C 21 D 9/60**, H 05 B 6/02

(21) Numéro de dépôt: **82420182.6**

(22) Date de dépôt: **23.12.82**

(54) **Procédé et dispositif de recuit continu de fils métalliques.**

(30) Priorité: **28.12.81 FR 8124633**

(43) Date de publication de la demande:
**06.07.83 Bulletin 83/27**

(45) Mention de la délivrance du brevet:
**12.06.85 Bulletin 85/24**

(84) Etats contractants désignés:
**BE CH DE GB IT LI LU NL**

(56) Documents cités:
**FR - A - 2 288 152**
**FR - A - 2 384 026**
**GB - A - 1 238 367**
**GB - A - 1 566 611**
**GB - A - 2 072 224**
**US - A - 2 459 507**
**US - A - 2 993 114**
**US - A - 3 328 554**
**US - A - 4 117 295**

(73) Titulaire: **TREFIMETAUX, 6, boulevard du Général Leclerc, F-92115 Clichy (FR)**

(72) Inventeur: **Moreau, Marc, 8, rue de Champagne, F-92600 Asnières (FR)**

(74) Mandataire: **Pascaud, Claude et al, PECHINEY 28, rue de Bonnel, F-69433 Lyon Cedex 3 (FR)**

ACTORUM AG

## Description

La présente invention a pour objets un procédé et un appareillage de recuit continu de fils métalliques notamment à base d'aluminium ou de cuivre.

Il est connu de recuire des fils métalliques en continu par effet Joule. Le courant de recuit dans le fil est, le plus souvent, alternatif et produit par induction. L'inducteur présente une forme générale torique, le fil passant au centre du tore. Le courant induit circule suivant l'axe du fil, à condition que ce dernier soit disposé en boucle refermée sur elle-même, par un contact électrique à l'extérieur de l'inducteur, constituant ainsi une spire en court-circuit formant le secondaire d'un transformateur dont l'inducteur représente le primaire.

Il est connu, en particulier, par le brevet GB-A N° 969192 (Somerset Wire Co. Ltd.), de refermer électriquement la boucle secondaire constituée par le fil en faisant passer celui-ci sur des poulies électriquement reliées entre elles. Ces poulies peuvent être ou non coaxiales.

Dans le cas du recuit de fils d'aluminium, ce procédé présente l'inconvénient de provoquer une détérioration rapide des bandes de contact des poulies.

Il est connu d'éviter cet inconvénient en réalisant le contact électrique direct entre le fil à recuire, c'est-à-dire le fil écroui, avant son entrée dans l'inducteur, et le fil recuit sortant de l'inducteur. Dans ce cas, le fil froid à recuire passe sur le fil chaud recuit. Un tel dispositif a été décrit dans le brevet US-A N° 2459507 (Western Electric, inventeur R.H. Denham).

Un premier inconvénient de ce procédé résulte du fait que le fil recuit, qui est chaud, est allongé par dilatation thermique et qu'il s'enroule sur le fond de la gorge de la poulie, alors que le fil à recuire, qui est froid et non dilaté, doit s'enrouler sur le fil recuit, donc sur un plus grand rayon, imposant une vitesse linéaire plus importante. Il est donc nécessaire de ménager une possibilité de glissement relatif entre les deux fils, ce qu'on réalise en limitant l'arc d'enroulement du fil à recuire. Cependant, la longueur du contact électrique s'en trouve réduite, ce qui représente un inconvénient grave du fait de la forte intensité du courant qui parcourt le fil. De plus, le glissement relatif blesse la surface du fil.

Un second inconvénient de ce procédé provient de ce que le fil, en fin de recuit, présente une température élevée, parfois proche de sa température de fusion. Dans ces conditions, toute surchauffe locale résultant du passage du courant d'un fil vers l'autre à travers la seule génératrice de contact, conduit à la formation d'étincelles et de cratères de fusion qui dégradent l'état de surface du fil de façon inacceptable.

Dans notre brevet FR-A N° 2288152 (= US-A N° 4118617), nous avons résolu ce problème en faisant passer le fil à recuire au fond de la gorge d'une poulie, en recuisant ce fil par chauffage à induction, puis en faisant passer le fil recuit dans la même gorge de la même poulie, au-dessus du fil à recuire, de façon à constituer une boucle fermée dans laquelle circule le courant de recuit. Le fil recuit est refroidi avant son passage dans la gorge de la poulie.

L'appareillage comprend un inducteur, une poulie à gorge profonde et un refroidisseur. Le fil à recuire passe au fond de la gorge de la poulie, puis dans l'inducteur qui génère le courant nécessaire au recuit; il revient ensuite à l'état recuit, dans la gorge de la poulie, au-dessus du fil à recuire, de façon à former une boucle fermée constituant le secondaire d'un transformateur électrique dont l'inducteur est le primaire. Le refroidisseur est placé entre la sortie de l'inducteur et la poulie.

L'appareillage, objet de notre brevet FR-A N° 2288152 (= US-A N° 4118617) est rappelé sur les fig. 1 et 2. Il comprend une poulie 1, présentant une gorge profonde 2, une première poulie de renvoi 3, une deuxième poulie de renvoi 4, un inducteur 5 muni d'un tube 6 de protection par vapeur d'eau qui est utilisé dans le cas du fil de cuivre, un refroidisseur 7, un essoreur à air comprimé 8 et une troisième poulie de renvoi 9.

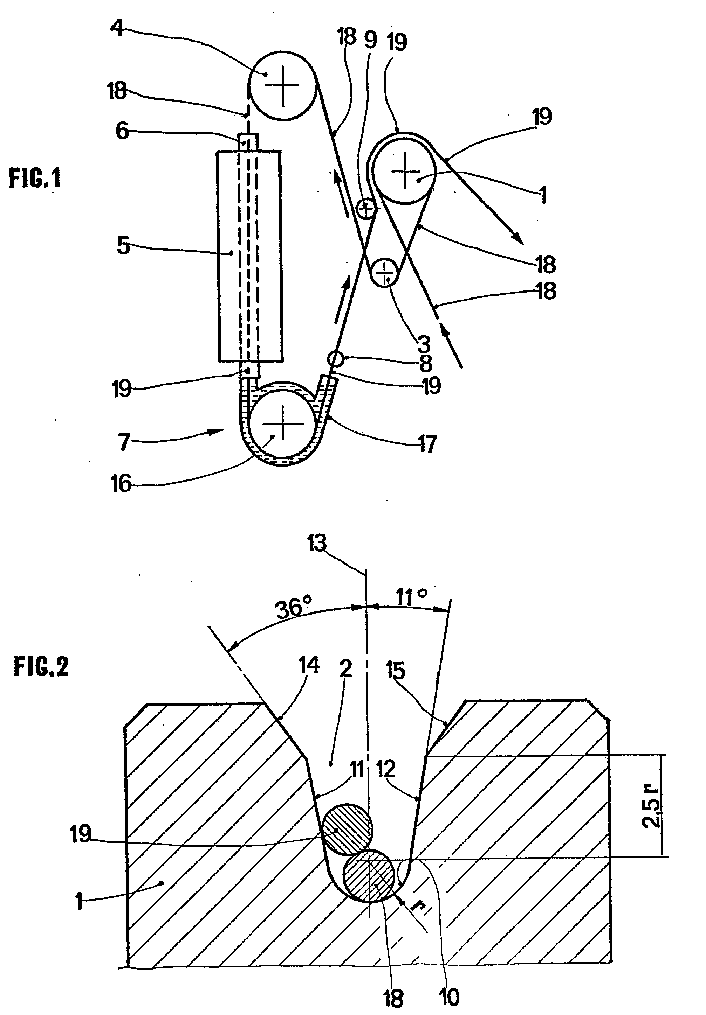

La section de la gorge 2 de la poulie 1 présente la forme illustrée par la fig. 2. Le fond 10 est constitué par un arc de cercle de rayon r suivi, sur une hauteur égale à 2,5 r, de deux tangentes 11 et 12 faisant, avec l'axe 13 de la section, un angle de 11°. A la partie supérieure de la gorge, ces deux tangentes sont relayées par deux segments de droite 14 et 15 faisant un angle de 36° avec le même axe 13 et débouchant à l'extérieur. La gorge, qui sert de guide pour le fil et non d'amenée de courant électrique, peut être réalisée en un matériau peu conducteur tel qu'acier inoxydable, carbures, céramiques. Cette forme de gorge permet de traiter un fil dont le rayon est compris entre 0,6 r et r. Des fils de diamètres très différents peuvent être traités avec le même appareillage en remplaçant la gorge profonde, soit que la poulie présente plusieurs gorges de rayons différents, soit que la gorge ou la poulie elle-même soient aisément démontables.

Le tube de protection 6 est en matériau électriquement isolé. En cas de recuit de fil de cuivre, il est parcouru par un courant de vapeur d'eau.

Le refroidisseur 7 comprend une poulie 16 enfermée dans un carter 17 dans lequel circule un fluide de refroidissement, en général de l'eau.

Pour plus de clarté, le fil porte, dans les fig. 1 et 2, deux repères différents suivant qu'il est à l'état écroui, avant recuit 18 ou qu'il est à l'état recuit 19. Il arrive à l'état écroui 18 de la filière, passe au fond de la gorge 2 de la poulie 1 suivant un arc important, de l'ordre de 270°, puis sur les poulies de renvoi 3 et 4. Il pénètre ensuite dans l'inducteur 5, d'où il ressort à l'état recuit 19, passe successivement dans le refroidisseur 7 sur la poulie 16 où il est refroidi, puis dans l'essoreur 8 où il est séché. Enfin, après passage sur la poulie de renvoi 9, il repasse dans la gorge 2 de la poulie 1, sur environ 180°, au-dessus du fil à l'état écroui 18, puis il sort de l'appareillage.

Les fils 18 et 19 se touchent sur un arc important, ce qui, du fait du diamètre important de la poulie, assure un excellent contact électrique, d'où l'absence d'étincelles et de réchauffage local. De plus, les fils 18 et 19 étant froids et à la même température, la vitesse linéaire du fil recuit 19 est peu différente de celle du fil à recuire 18, ce qui ne se traduit pas par un glissement relatif des fils, mais par un léger allongement du fil dans la zone de recuit, ce qui est favorable à sa bonne tension mécanique et améliore le contact électrique avec le fil 18.

Cet appareillage donne des résultats tout à fait satisfaisants pour le recuit continu de fils de petit diamètre, par exemple dans la gamme de 0,2 à 2 mm, à une vitesse qui peut atteindre 1800 m/min, la poulie principale 1 ayant un diamètre de 200 mm.

Cependant, lorsqu'on veut recuire en continu des fils de plus grand diamètre, par exemple des fils de laiton, dont le diamètre peut se situer entre 2 et 5,5 mm, on se heurte à de sérieuses difficultés, dues à la fragilité du laiton dans la zone de montée en température et à des échanges thermiques excessifs entre les poulies et le fil à recuire qui, en raison de son plus grand diamètre, défile nécessairement à une vitesse sensiblement réduite, et qui peut être, par exemple, de l'ordre de 5 à 120 m/min au lieu de plusieurs centaines jusqu'à près de 2000 m/min dans le cas de fils fins. Il en résulte un niveau de recuit insuffisant.

L'invention a pour objets un procédé et un dispositif tels que définis dans les revendications. Elle constitue un perfectionnement de l'appareillage objet de notre brevet FR-A N° 2288152 (= US-A N° 4118617), qui supprime les inconvénients précités et permet de recuire en continu des fils métalliques de diamètre relativement important, pouvant aller, selon le type de métal ou d'alliage, jusqu'à 5 ou 6 mm, sans que cette valeur constitue toutefois une limite absolue. L'invention est caractérisée en ce que la poulie principale et, de préférence, également la poulie de renvoi comportent une gorge dont les flancs sont munis d'une pluralité d'inserts en une matière à point de fusion élevé, à faible conductivité thermique et électrique telle que l'alumine, résistant à l'usure et à l'abrasion, qui entrent en contact ponctuel avec le fil métallique circulant dans la gorge. De façon tout à fait surprenante, nous avons constaté que ces contacts ponctuels permettaient de supporter le fil sans le blesser ou le marquer de traces gênantes et que l'ensemble de ces contacts ponctuels successifs, séparés par des intervalles où le fil ne prend aucun appui, constituaient l'équivalent d'une gorge virtuelle continue. De préférence, les flancs de cette gorge virtuelle forment un angle de 90°.

Cette disposition permet de traiter non seulement des fils ronds, mais des fils à section carrée ou hexagonale, ou autre.

L'appareillage comporte, en outre, un moyen de refroidissement du fil disposé à la sortie de la poulie de renvoi située à la sortie de l'inducteur, et avant le retour du fil sur la gorge de la poulie principale.

La solution consistant à revêtir l'ensemble de la gorge d'une matière céramique n'a pas été retenue. En effet, elle présente deux inconvénients:

La conductivité thermique des céramiques compactes et dures telles que l'alumine est loin d'être négligeable, et le but recherché n'aurait pas été atteint dans le cas d'un contact fil-gorge sur un arc de cercle de 180°. En outre, la réalisation d'une gorge continue en céramique aurait constitué, à l'échelle industrielle, une difficulté très sérieuse et aurait été d'un coût prohibitif.

Les fig. 1 et 2 se rapportent à notre brevet FR-A N° 2288152.

Les fig. 3 à 5 illustrent la mise en œuvre de l'invention.

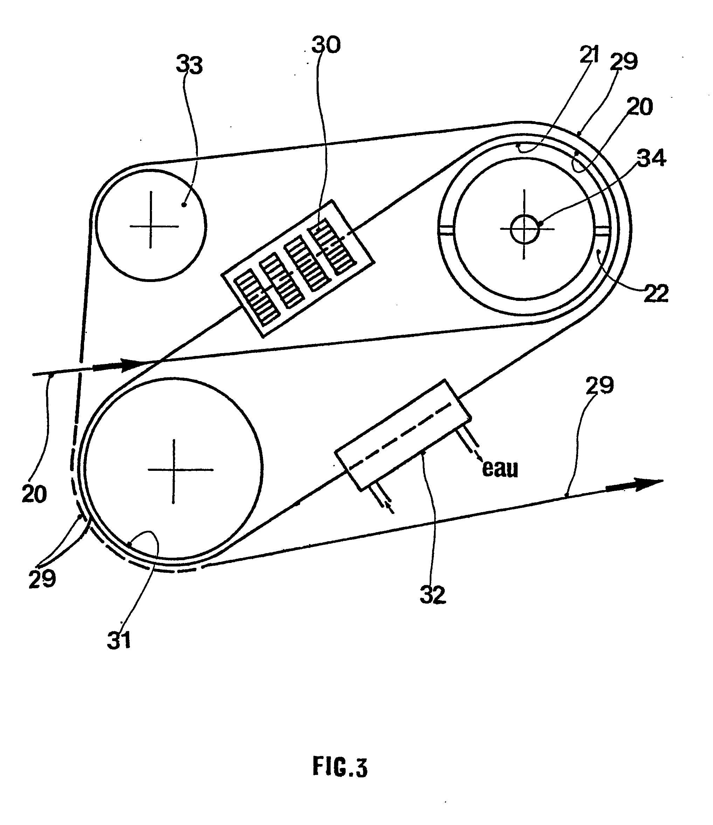

La fig. 3 montre le schéma d'ensemble d'un dispositif de recuit continu selon l'invention.

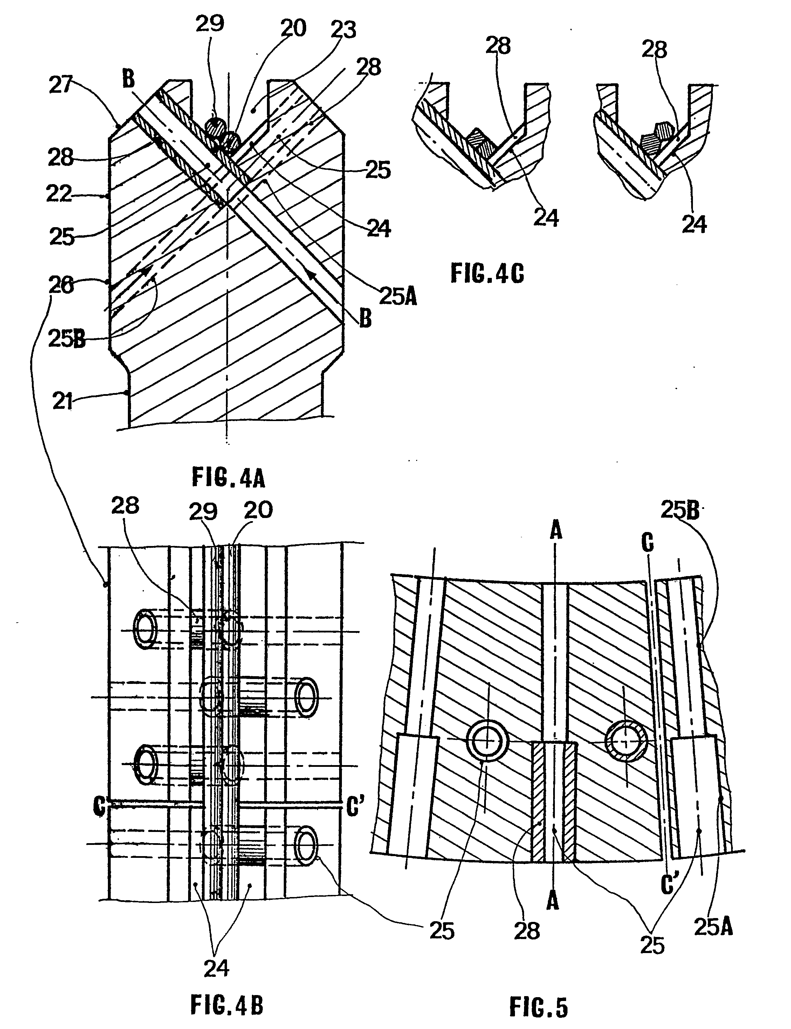

La fig. 4 montre en coupe 4A et en vue 4B la gorge de la poulie principale, la fig. 4C montre comment le fil se place dans la gorge de la poulie principale lorsqu'il est à section carrée ou hexagonale.

La fig. 5 est une coupe de la gorge selon l'axe.

Le fil écroui 20 que l'on veut recuire est dirigé vers la poulie principale 21. Pour mieux comprendre le trajet du fil, on l'a représenté à l'extérieur des poulies mais, dans la réalité, il circule bien dans les gorges des différentes poulies.

La jante 22 de cette poulie comporte une gorge 23 dont les flancs 24 forment un angle sensiblement égal à 90°; elle comporte en outre, sur toute sa périphérie, deux séries de cavités 25 dont les axes forment entre eux un angle sensiblement égal à 90° et égal à l'angle formé par les flancs 24 de la gorge 23. Ces cavités débouchent sur les faces latérales 26 de la jante. L'autre extrémité peut être fermée ou débouchée sur les rebords internes 27 de la jante.

Dans ce dernier cas, qui est celui représenté sur la fig. 4A, les cavités 25 comportent deux parties, une partie avant 25A et une partie arrière 25B dont le diamètre est inférieur à celui de la partie 25A. Dans tous les cas, la partie avant 25A doit s'étendre au moins jusqu'au voisinage de la gorge 23. En outre, le diamètre de la partie avant 25A est tel que la cavité débouche sur le flanc correspondant de la gorge.

Dans la partie avant des cavités 25A, on a introduit et fixé, par exemple par collage avec une colle organique ou un ciment minéral, des perles en céramique 28 dont le diamètre externe est sensiblement égal au diamètre intérieur des cavités 25A. Ces perles sont, de préférence, creuses, de telle sorte qu'il se forme un conduit continu avec la partie rétrécie 25B des cavités, ce qui permet d'assurer, le cas échéant, un certain refroidissement des perles, par circulation d'air forcée et évite leur échauffement excessif. Les flèches de la fig. 4A indiquent comment peut être dirigé le flux d'air de refroidissement.

Une partie de chaque perle faisant saillie dans les flancs de la gorge, le fil 20 vient en appui ponctuel sur les perles, alternativement sur chaque flanc de la gorge virtuelle ainsi formée, mais n'entre pas en contact avec les flancs 24 et la gorge métallique 23.

Les perles sont suffisamment rapprochées pour que le fil, surtout s'il est de gros diamètre (2 à 6 mm par exemple), n'ait aucune tendance à prendre une forme ondulée. En pratique, l'écart entre l'axe des perles sur chaque flanc peut atteindre de 3 à 10 fois, et même jusqu'à 20 fois, le diamètre du fil à recuire.

Lorsqu'on recuit du fil rond, le fil entrant 20 se loge au fond de cette gorge, et le fil recuit 29 passe dans la même gorge, en relation superposée avec le fil entrant, conformément à l'invention. Lorsqu'on recuit du fil à section carrée ou hexagonale, le positionnement et la superposition du fil entrant 20 et du fil recuit 29 dans la gorge s'effectuent sans difficulté (fig. 4C) (ce qui n'aurait pas été le cas dans la forme de gorge revendiquée dans notre brevet FR-A N° 2288152), assurant ainsi un contact électrique excellent.

Après passage sur la poulie principale 21, le fil 20 passe au travers de l'inducteur 30, puis sur la grande poulie de renvoi 31 qui est constituée par une poulie à deux gorges parallèles et séparées, l'une sur laquelle passe le fil sortant de l'inducteur, et qui est équipée du même dispositif de perles en céramique que la poulie 21, l'autre qui est une simple gorge métallique, taillée dans la jante de la poulie, et de diamètre sensiblement égal à celui de la gorge parallèle formée par les perles céramiques. Pour la clarté du dessin, le trajet du fil recuit, qui s'effectue dans la gorge métallique, a été tracé en traits interrompus. Le fil recuit 29 passe ensuite au travers d'un dispositif de refroidissement à lame d'eau 32, tel que celui qui fait l'objet du brevet français N° 2442418 (Tréfimétaux) et qui est capable d'évacuer, par exemple, sur un fil de laiton de 5,5 mm de diamètre porté à 650° par l'inducteur et circulant à 5 m/s, un flux thermique de l'ordre de 50 MW/m².

Le fil recuit froid passe à nouveau sur la poulie principale 21 au-dessus du fil écroui 20 puis sur la petite poulie de renvoi 33, puis dans la gorge métallique de la grande poulie de renvoi 31 (tracés en traits interrompus) et sort de l'appareil recuiseur à destination, par exemple, d'un enrouleur.

*Exemple de réalisation*

On a construit un recuiseur mettant en œuvre la présente invention, particulièrement destiné au recuit de fils de laiton de 2 à 5,5 mm de diamètre. La poulie principale 21 a un diamètre sur fond de gorge de 750 mm. La gorge est constituée en deux moitiés symétriques par rapport à un plan passant par son axe de rotation. La séparation apparaît en CC' sur les fig. 4B et 5. Les deux moitiés sont assemblées par des pièces électriquement isolantes, et sont maintenues espacées de 1 à 2 mm, afin d'éviter tout risque de bouclage de la tension induite par le courant de recuit dans la poulie 21 qui est métallique et montée sur un moyeu isolant 34.

La gorge comporte, sur chacun de ses flancs, 72 perles en alumine de 10 mm de diamètre extérieur, 4 mm de diamètre intérieur et 30 mm de long. Sur chaque flanc, la distance entre perles est de 35 mm entre axes.

L'inducteur 30 induit dans le fil 20 un courant pouvant atteindre 6000 A sous 70 V, ce qui permet, par exemple, de recuire du fil de laiton de 5,5 mm de diamètre à une vitesse de 5 m/s.

Le fil sortant a un état de surface particulièrement remarquable, exempt de rayures ou de traces de décharges électriques. En outre, le recuit rapide ainsi obtenu est particulièrement avantageux si l'on traite des laitons au plomb (laitons de décolletage pouvant contenir jusqu'à 3 ou 4% de plomb), car il évite la coalescence des particules de plomb qui ne manque pas de se produire lors du recuit statique en four fermé et qui se traduit, lors du décolletage, par des copeaux longs et fins, peu fragiles, qui s'enchevêtrent et tendent à bourrer les tours automatiques.

**Revendications**

1. Procédé de recuit rapide en continu d'un fil métallique en défilement, dans lequel on fait passer le fil à recuire dans la gorge d'une poulie, on recuit ce fil par chauffage par courant induit, puis on fait passer le fil recuit dans la même gorge de la même poulie, au-dessus du fil à recuire, de façon à constituer une boucle fermée dans laquelle circule le courant induit, le fil recuit étant refroidi avant son passage dans la gorge de la poulie, caractérisé en ce que le fil prend appui sur les flancs de la gorge par une pluralité de contacts ponctuels, laissant entre eux des espaces libres.

2. Dispositif pour le recuit rapide, en continu, d'un fil métallique en défilement, comportant une poulie principale, au moins une poulie de renvoi, un inducteur, un refroidisseur, caractérisé en ce que la poulie principale comporte une gorge dont les flancs sont munis d'une pluralité d'inserts en une matière à faible conductivité thermique et électrique, résistant à l'usure et à l'abrasion, qui sont en contact ponctuel avec le fil métallique circulant dans la gorge.

3. Dispositif selon la revendication 2, caractérisé en ce que, sur chaque flanc de la gorge, les contacts ponctuels successifs sont situés à une distance comprise entre 3 et 20 fois le diamètre du fil à recuire.

4. Dispositif selon l'une des revendications 2 ou 3, caractérisé en ce que l'ensemble des points de contacts successifs du fil métallique en défilement, sur les inserts disposés sur les flancs de la gorge, constituent l'équivalent d'une gorge virtuelle continue dont les flancs forment un angle de 90°.

5. Dispositif selon l'une des revendications 2 à 4, caractérisé en ce que les inserts sont constitués par des perles cylindriques en céramique à base d'alumine.

6. Dispositif selon la revendication 5, caractérisé en ce que les perles sont creuses et parcourues par un fluide de refroidissement.

7. Dispositif selon l'une des revendications 2 à 6, caractérisé en ce que la poulie de renvoi située à la sortie de l'inducteur comporte deux gorges de diamètre sensiblement égal dont l'une est munie, sur ses flancs, d'inserts du même type que ceux de la poulie principale.

8. Dispositif selon l'une des revendications 2 à 7, caractérisé en ce qu'il comporte un moyen de refroidissement du fil disposé à la sortie de la poulie de renvoi située à la sortie de l'inducteur, et avant le retour du fil sur la gorge de la poulie principale.

9. Dispositif selon l'une des revendications 2 à 8, caractérisé en ce que la gorge de la poulie principale est formée de deux parties symétriques par rapport à un plan passant par l'axe de rotation et en ce que les deux moitiés sont assemblées par des moyens de jonction électriquement isolants qui maintiennent entre elles un espace électriquement isolant vis-à-vis de la tension induite dans la poulie par le courant qui circule dans le fil en cours de recuit.

## Claims

1. A process for the rapid continuous annealing of a travelling metal wire, in which the wire to be annealed is passed into the groove of a pulley, this wire being annealed by heating with an induced current, the annealed wire being then passed into the same groove of the same pulley, above the wire to be annealed so as to constitute a closed loop in which the induced current circulates, the annealed wire being cooled before it passes into the groove of the pulley, characterized in that the wire rests on the sides of the groove *via* a plurality of point contacts, leaving free spaces between them.

2. A device for the rapid continuous annealing of a travelling metal wire, comprising a main pulley at least one return pulley, an inductor, a cooler, characterized in that the main pulley comprises a groove of which the sides are equipped with a plurality of inserts made of a material of low thermal and electrical conductivity, which is resistant to wear and to abrasion, which make point contact with the metal wire circulating in the groove.

3. A device according to Claim 2, characterized in that on each side of the groove the successive point contacts are situated at a distance of between 3 and 20 times the diameter of the wire to be annealed.

4. A device according to Claim 2 or 3, characterized in that all the successive points of contact of the travelling metal wire on the inserts arranged on the sides of the groove constitute the equivalent of a continuous virtual groove the sides of which form an angle of 90°.

5. A device according to one of Claims 2 to 4, characterized in that the inserts are constituted by cylindrical beads made of alumina-based ceramic material.

6. A device according to Claim 5, characterized in that the beads are hollow and are traversed by a coolant.

7. A device according to one of Claims 2 to 6, characterized in that the return pulley situated at the outlet of the inductor comprises two grooves of approximately equal diameter one of which is equiped, on its sides, with inserts of the same type as those in the main pulley.

8. A device according to one of Claims 2 to 7, characterized in that it comprises a means for cooling the wire arranged at the outlet of the return pulley situated at the outlet of the inductor and before the return of the wire on the groove of the main pulley.

9. A device according to one of Claims 2 to 8, characterized in that the groove of the main pulley is formed by two portions which are symmetrical about a plane passing through the axis of rotation, and in that the two halves are assembled by electrically insulating connection means which maintain between them a space which is electrically insulating towards the voltage induced in the pulley by the current circulating in the wire being annealed.

## Patentansprüche

1. Verfahren zum schnellen und kontinuierli-chen Vergüten von durchlaufenden Metalldräh-ten, bei dem der zu vergütende Draht durch die Seilrille einer Rolle geführt wird, der Draht durch Aufheizen mittels eines induzierten Stroms vergütet und dann der vergütete Draht durch dieselbe Seilrille derselben Rolle über den zu vergüteten Draht geführt wird, um einen geschlossenen Stromkreis zu bilden, in dem der induzierte Strom fliesst, wobei der vergütete Draht vor seinem Durchlauf durch die Seilrille der Rolle abgekühlt wird, dadurch gekennzeichnet, dass der Draht über mehrere punktförmige Kontaktstellen, zwischen denen Freiräume ausgebildet sind, auf den Flanken der Seilrille aufliegt.

2. Vorrichtung zum schnellen kontinuierlichen Vergüten von durchlaufenden Metalldrähten mit einer Hauptrolle, mindestens einer Umlenkrolle, einem Induktor, einer Kühlvorrichtung, dadurch gekennzeichnet, dass die Hauptrolle eine Seilrille aufweist, deren Flanken mit mehreren Einsatztei-len aus thermisch- und elektrischschwachleiten-dem abnutzungs- und abriebsresistentem Material versehen sind, die punktweise mit dem durch die Seilrille geführten Metalldraht in Berührung stehen.

3. Vorrichtung nach Anspruch 2, dadurch gekennzeichnet, dass die aufeinanderfolgenden Punktkontakte in einem Abstand zueinander von dem drei- bis zwanzigfachem des Durchmessers des zu vergütenden Drahts auf den Flanken angeordnet sind.

4. Vorrichtung nach einem der Ansprüche 2 oder 3, dadurch gekennzeichnet, dass die Gesamtheit der aufeinanderfolgenden Kontaktpunkte des durchlaufenden Metalldrahts auf den Flanken der Seilrille angeordneten Einsatzteil einer virtuellen Seilrille entspricht, deren Flanken einen Winkel von 90° miteinander einschliessen.

5. Vorrichtung nach einem der Ansprüche 2 bis 4, dadurch gekennzeichnet, dass die Einsatzteile Zylinderperlen aus einem keramischen Werkstoff auf Tonerdebasis sind.

6. Vorrichtung nach Anspruch 5, dadurch gekennzeichnet, dass die Perlen innen hohl und von einer Kühlflüssigkeit durchströmt sind.

7. Vorrichtung nach einem der Ansprüche 2 bis 6, dadurch gekennzeichnet, dass die am Ausgang des Induktors angeordnete Umlenkrolle zwei Seilrillen mit etwa gleichem Durchmesser aufweist, von denen eine auf ihren Flanken mit Einsatzteilen vom gleichen Typ wie die der Hauptrolle versehen ist.

8. Vorrichtung nach einem der Ansprüche 2 bis 7, gekennzeichnet durch eine in Durchlaufrichtung hinter der am Ausgang des Induktors angeordneten Umlenkrolle und vor dem Eingriff des Drahts in die Seilrille der Hauptrolle angeordnete Kühlvorrichtung.

9. Vorrichtung nach einem der Ansprüche 2 bis 8, dadurch gekennzeichnet, dass die Seilrille der Hauptrolle aus zwei zu einer durch die Rotationsachse verlaufenden Ebene symmetrischen Teilen besteht und dass die zwei Hälften mittels elektrisch isolierender Verbindung zusammengefügt sind, die zwischen den beiden Hälften einen die in der Rolle durch den durch den Draht während der Vergütung fliessenden Strom induzierte Spannung isolierenden Raum bilden.

**FIG.1**

**FIG.2**

7

**FIG.3**

0 083 291

**FIG.4A**

**FIG.4C**

**FIG.4B**

**FIG.5**